# EUROPÄISCHE PATENTSCHRIFT

(11) **EP 2 427 670 B1**
(45) Veröffentlichungstag und Bekanntmachung des Hinweises auf die Patenterteilung: **25.06.2014**
(21) Anmeldenummer: 10720124.6
(22) Anmeldetag: 02.05.2010
(51) Int. Cl.: F16F 7/12, F16F 1/04

(54) **VORRICHTUNG ZUR ABSORPTION KINETISCHER ENERGIE EINES BEWEGTEN KÖRPERS**
DEVICE FOR ABSORBING KINETIC ENERGY OF A MOVING BODY
DISPOSITIF D'ABSORPTION DE L'ÉNERGIE CINÉTIQUE D'UN CORPS MOBILE

(30) Priorität: 05.05.2009 CH 704092009
(43) Veröffentlichungstag der Anmeldung: 14.03.2012
(73) Patentinhaber: Geobrugg AG, 8590 Romanshorn (CH)
(72) Erfinder: VON ALLMEN, Hans Peter, CH-1712 Tafers (CH); BAER, Toni, CH-3855 Schwanden b. B. (CH); RÜEGSEGGER, Rudolf, CH-3052 Zollikofen (CH)
(74) Vertreter: Luchs, Willi
(86) Internationale Anmeldenummer: PCT/EP2010/002666
(87) Internationale Veröffentlichungsnummer: WO 2010/127812

(56) Entgegenhaltungen:
- WO-A-01/87420
- JP-A- 5 231 032
- US-A- 4 358 136
- US-A- 5 332 071

## Beschreibung

Die Erfindung bezieht sich auf eine Vorrichtung zur Absorption kinetischer Energie eines bewegten Körpers gemäss Oberbegriff des Anspruches 1.

Vorrichtungen, bei welchen durch Strecken eines Zuggliedes gegen seinen Material- und Formwiderstand Energie absorbiert wird, werden in vielen Anwendungsgebieten eingesetzt, so z.B. als Absturzbremsen im Bergsport oder bei Montagearbeiten im Bauwesen, als sogenannte "shock absorber" bei Sicherheitsgurten im Automobilbau oder als Bremsen in dynamisch beanspruchten Tragwerken wie Auffangnetzen, Seilabschrankungen und dgl.

Dabei werden plastisch verformbare Zugglieder bevorzugt, da bei einer vorwiegend elastischen Verformbarkeit, wie sie z.B. bei nicht überstreckten Federn aus Federstahl oder Gummibändern gegeben ist, die aufgenommene kinetische Energie nur temporär gespeichert und anschliessend mehrheitlich wieder an den abgebremsten Körper zurückgegeben würde, was diesen erneut in Bewegung versetzen würde.

Bei der Energieabsorption ist ein konstanter Verlauf der Bremskraft über den gesamten Bremsweg wünschenswert, da dadurch der bewegte Körper mit einer konstanten negativen Beschleunigung abgebremst und damit einer kräftemässig gleich bleibenden Beanspruchung ausgesetzt wird.

Zugglieder in Form von elastisch oder plastisch verformbaren Schraubenfedern weisen jedoch bei einer Zugbeanspruchung über den Federweg hin nicht konstante Federkräfte auf. Bei einer Schraubenfeder steigt die Federkraft mit zunehmendem Federweg an, weil alle Windungen gleichzeitig beansprucht werden, indem sich diese unter gleichzeitiger Verkleinerung des Windungsdurchmessers und Vergrösserung der Ganghöhe strecken und so ihren Widerstand gegen weiteres Strecken stetig vergrössern.

In der Druckschrift WO-A-01/87420 ist ein Energieabsorber geoffenbart, bei welchem ein wendelförmig gedrehter Draht vorgesehen ist, bei dem das eine Ende um Rollen und durch die Wendelform geführt und unten an einem fixen Teil befestigt ist. Eine Zugschlaufe ist an einer abgewinkelten Halterung befestigt, an welcher die Rollen drehbar gelagert sind bzw. ihr anderes Ende an diesem einen Ende des gewundenen Drahtes gehalten ist. Bei einer Kraftabsorbtion wird die Zugschlaufe weggezogen und dadurch der gewundene Draht durch Abwälzen um die Rollen gestreckt, dies bis der gesamte Draht zu einer Geraden gelängt ist. Bei dieser Umformung des Drahtes geht dieser zu einer federähnlichen Form gewundene Draht mit der Schlaufe und den Rollen mit, damit der Draht stets ausgehend von der gewundenen Form um die erste und dann um die zweite Rolle geführt ist. Diese Ausbildung eines Energieabsorbers eignet sich aber nicht für eine Anwendung bei Steinschlagschutzverbauungen, bei denen Energien von mehreren Tonnen Gewicht innerhalb von sehr kurzer Zeitdauer von Sekundenbruchteilen auffangen müssten. Aufgabe der vorliegenden Erfindung ist es, eine Vorrichtung mit einem Zugglied anzugeben, die über den Grossteil des gesamten Bremswegs mit möglichst konstanter Bremskraft streckbar ist.

Eine Vorrichtung, die diese Aufgaben löst, ist in Anspruch 1 angegeben. Die weiteren Ansprüche geben bevorzugte Ausführungsformen der erfindungsgemässen Vorrichtung an.

Die Erfindung wird weiter an Ausführungsbeispielen unter Bezugnahme auf Figuren erläutert. Es zeigen
- Fig. 1: einen Längsschnitt durch eine erfindungsgemässe Vorrichtung im Zustand der Beanspruchung;
- Fig. 2: den Schnitt I - I durch die Vorrichtung aus Fig. 1;
- Fig. 3: ein Bremskraft-Bremsweg-Diagramm; und
- Fig. 4: eine weitere Variante einer erfindungsgemässen Vorrichtung in einem Längsschnitt.

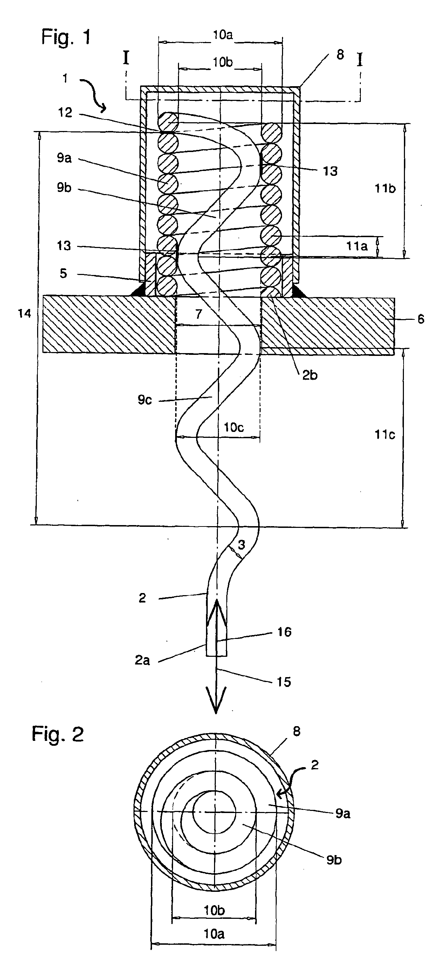

Fig. 1 zeigt eine erfindungsgemässe Vorrichtung 1 nach einer teilweisen Beanspruchung durch eine äussere Kraft 15, welche auf ein Zugglied 2 wirkt und so eine der Kraft 15 entgegengerichtete Bremskraft 16 hervorruft. Das Zugglied 2 ist in Form einer Schraubenfeder mit mehreren 360°-Windungen 9a, 9b, 9c ausgebildet. Mit 9a ist der Teil der Windungen bezeichnet, welche übereinander gestapelt und von der Kraft 15 noch unbeansprucht sind. 9b bezeichnet den Teil der beanspruchten Windungen, welche innerhalb der unbeanspruchten Windungen 9a verläuft, während 9c der Teil der beanspruchten Windungen ist, der aus dem gemäss Fig. 1 unteren Ende der unbeanspruchten Windungen 9a herausragt. Dieses untere Ende des Stapels der Windungen 9a wird nachfolgend auch als Anlageende des Stapels bezeichnet, während das freie Ende das gemäss Fig. 1 obere Ende des Stapels der Windungen 9a bezeichnet.

Die Schraubenfeder ist aus einem Draht mit dem Drahtdurchmesser 3 gebildet und ist plastisch verformbar. In Fig. 1 ist das verformte Zugglied 2 nach einer Streckung um den Bremsweg 14 dargestellt.

Der Stapel der 360°-Windungen 9a ist mit einer Schutzhaube 8 verschlossen. Das Anlageende dieses Stapels ist von einem Zentrierring 5 umgeben und liegt an einer fest mit diesem verbundenen Auflagerplatte 6 an. Diese ist mit einer Durchgangsöffnung 7 versehen, deren Durchmesser mindestens dem Innendurchmesser der Windungen 9a entspricht.

Dem gestapelten Teil der Windungen 9a des Zuggliedes 2 schliesst sich der Teil der Windungen 9b an, die sich in fortschreitender plastischer Verformung befinden, worauf der Teil der Windungen 9c folgt, die nicht weiter verformt werden.

Die unbeanspruchten Windungen 9a sind mit dem Windungsdurchmesser 10a und der Ganghöhe 11a gestapelt. Der Stapel aus Windungen 9a mit dem Ende des Zuggliedes 2b stützt sich auf der Auflagerplatte 6 ab und wird über der Durchgangsöffnung 7 mittels Zentrierring 5 positioniert.

Zentrierring 5 und Auflagerplatte 6 bilden Anschlagsmittel, welche gewährleisten, dass der Stapel der Windungen 9a seine Position beibehält, wenn die Windungen 9b verformt werden. Insbesondere ist durch das Vorsehen des Zentrierringes 5 eine Anschlagsfläche gegeben, welche eine Verschiebung des Stapels quer zu seiner Erstreckungsrichtung verhindert und so der Durchgang immerzu mit der Durchgangsöffnung 7 fluchtet.

Eine am Anfang des Zuggliedes 2a wirkende äussere Kraft 15, welche vom Zug herrührt, der von der Bewegung des zu bremsenden Körpers bewirkt wird, ruft eine der Kraft 15 entgegengerichtete Bremskraft 16 hervor. Durch das nacheinander Hindurchziehen der Windungen 9a durch den Durchgang, begrenzt durch die Innenfläche des Stapels der Windungen 9a und die Durchgangsöffnung 7 der Auflagerplatte 6, werden die Windungen 9a über die Zwischenform 9b zu Windungen 9c mit dem kleineren Windungsdurchmesser 10c und der grösseren Ganghöhe 11c verformt. Die Zwischenform 9b weist einen Windungsdurchmesser 10b und eine Ganghöhe 11 b auf. Die Verformung des Zuggliedes 2 erfolgt so, dass der jeweilige Windungsdurchmesser 10a, 10b, 10c abnimmt, während die jeweilige Ganghöhe 11a, 11b, 11c zunimmt.

Beim Verformen gleitet die Windung 9b über die darunterliegende Windung 9a, wobei sich die dazwischen befindende Berührungsstelle 12 fortlaufend ändert, so dass immer neue Oberfläche der Windung 9b auf neuer Oberfläche der darunterliegenden Windung 9a gleitet. Beim Hindurchziehen der Windungen 9b durch den Durchgang, begrenzt durch die Innenfläche des Stapels der Windungen 9a und die Durchgangsöffnung 7 der Auflagerplatte 6, gleiten die Windungen 9b entlang den Oberflächen der Windungen 9a, wobei sich die dazwischen befindenden Berührungsstellen 13 fortlaufend ändern, so dass immer neue Oberfläche der Windung 9b auf der Oberfläche des Stapels der Windungen 9a gleitet.

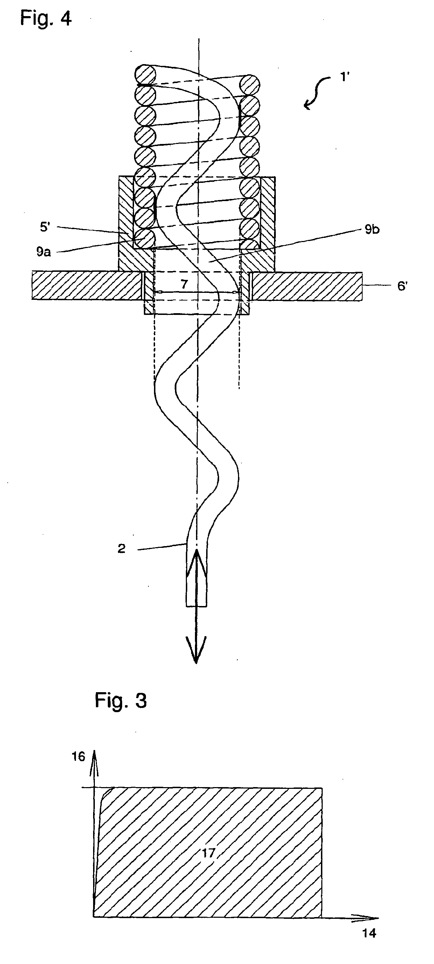

Der Anteil der Gleitreibung an der Bremskraft (in Fig. 3 mit 16 bezeichnet), resultierend aus den Anteilen an den Berührungsstellen 12 und 13, nimmt neben dem Hauptanteil aus plastischer Verformung der Windungen 9b über den gesamten Bremsweg (in Fig. 3 mit 14 bezeichnet) einen in etwa konstanten Wert an, so dass die Bremskraft 16 insgesamt über den Bremsweg 14 gleich bleibt.

Der Zentrierring 5 weist eine axiale Länge auf, die kleiner als die Länge des Stapels der Windungen 9a ist, und umgibt vorzugsweise nur einige wenige der Windungen 9a am Anlageende des Stapels. Dessen freies Ende ist somit nicht vom Zentrierring 5 umgeben, wodurch eine zusätzliche Reibung zwischen Zugglied 2 und Zentrierring 5 vermieden wird, wenn sich jeweils die äusserste Windung 9a am freien Ende des Stapels zu verformen beginnt.

Zur Reduktion der Gleitreibung an den Berührungsstellen 12 und 13 können die Gleiteigenschaft und die Verschleissfestigkeit der Oberfläche des oder der Drähte z.B. durch Salzbadnitrocarburieren (z.B. nach dem Tenifer-QPQ-Verfahren, wobei QPQ für Quenchen-Polieren-Quenchen steht) verbessert werden. Es ist sind auch andere Massnahmen zur Oberflächenbehandlung denkbar, um die Gleitreibung zu vermindern. Unter Umständen reicht z.B. ein Polieren der Oberfläche des Drahtes.

Um ein Verbinden des Zuggliedes 2a mit dem zu bremsenden Körper zu erleichtern, kann bereits bei der Herstellung der Vorrichtung 1 vorgesehen sein, dass der Anfang 2a des Zuggliedes 2 durch den Stapel der Windungen 9a hindurchgezogen ist oder zumindest in diesen hineinragt. Im Weiteren kann der Anfang 2a mit einer geeigneten Anhängevorrichtung versehen sein, die z.B. zum Anhängen eines Seiles dient.

Fig. 2 den Schnitt I - I durch die Vorrichtung aus Fig. 1 mit der Schutzhaube 8, welche die gestapelten Windungen 9a mit dem Windungsdurchmesser 10a umschliesst, die nacheinander ais piastisch verformte Windung 9b mit dem Windungsdurchmesser 10b durch den Durchgang, begrenzt durch die Innenfläche der Windungen 9a und die Durchgangsöffnung 7, gezogen werden.

Fig. 3 zeigt den Verlauf eines Bremskraft-Bremsweg-Diagrammes bei der Beanspruchung der Vorrichtung 1 gemäss Fig. 1. Wie ersichtlich, erreicht die Bremskraft 16 auf einem sehr kurzen Bremsweg 14 ihren Endwert, der über den Rest des Bremsweges 14 praktisch gleich bleibt. Die Fläche 17 unter der Kurve entspricht der absorbierten Energie 17 resultierend aus der Bremskraft 16 und dem Bremsweg 14 bei der Beanspruchung der Vorrichtung 1 gemäss Fig. 1.

Fig. 4 zeigt eine weitere Variante der erfindungsgemässen Vorrichtung 1'. Hier sind Anschlagsmittel in Form einer Hülse 5' vorgesehen, welche durch Bildung einer Stufe verjüngend ausgebildet ist. Die gestapelten Windungen 9a liegen an der Stufe der Hülse 5' an, während die sich verformende Windung 9b durch das kleinere Loch in der Hülse 5' hindurchragt, dessen Durchmesser 7 entsprechend der Variante gemäss Fig. 1 gewählt ist. Das verjüngte Ende der Hülse 5' greift in eine in einem Träger 6' gebildetes Loch.

Die Hülse 5' dient einerseits als Auflager für das Zugglied 2 und andererseits als seitlicher Anschlag, welcher bei der Beanspruchung eine seitliches Ausweichen des Zuggliedes 2 verhindert. Die Hülse 5' ist aus einem Stück fertigbar.

Der Träger 6' kann z.B. eine bereits bestehende Stütze oder drgl. sein, in welche zur Montage der Vorrichtung 1' ein Loch gebohrt und dann das verjüngte Ende der Hülse 5' eingefügt wird.

Die erfindungsgemässe Vorrichtung ist vielseitig einsetzbar, z.B. als Absturzbremse, wie sie im Bergsport oder bei Montagearbeiten im Bauwesen verwendet wird, als "shock absorber" bei Sicherheitsgurten im Automobilbau und/oder als Bremse in dynamisch beanspruchten Tragwerken wie Auffangnetzen, Seilabschrankungen und dgl.

Die Vorrichtung 1, 1' ist entsprechend dem Anwendungszweck ausgelegt. Der Bremskraftbereich liegt z.B. bei Absturzsicherungen für Personen im Bereich von zwei bis drei kN bei Bremsweglängen von einigen Dezimetern bis ein bis zwei Meter. Bei dynamisch beanspruchten Tragwerken kann eine Bremskraft bis 200 kN oder grösser erforderlich sein bei Bremsweglängen von mehreren Metern.

Als Zugglied kommen bevorzugt runde Drähte im Bereich von einigen Millimetern bis wenigen Zentimetern Durchmesser in Frage, die Zugfestigkeiten von 500 bis 2000 N/mm2 aufweisen, wobei Drähte, die auch eine hohe Duktilität aufweisen, besonders bevorzugt sind. Als Zugglied ist u.a. Stahldraht geeignet.

Aus der vorangehenden Beschreibung sind dem Fachmann zahlreiche Abwandlungen zugänglich, ohne den Schutzbereich der Erfindung zu verlassen, der durch die Ansprüche definiert ist.

Als Zugglied 2 kann anstelle eines Vollprofiles auch ein Hohlprofil, wie z.B. ein dickwandiges Stahlrohr verwendet werden.

Es ist auch denkbar, dass als Zugglied 2 ein gewundenes Stahlrohr verwendet wird, durch dessen Inneres ein Seil geführt wird, das als primäres Zugglied wirkt und dabei die äusseren Kräfte 15 auf die Windungen (9a, 9b, 9c) überträgt und so die Bremskraft 16 mobilisiert. Dabei wird nach der Abbremsung die äussere Kraft 15 über das Seil übertragen.

Weiter braucht der Stapel der unbeanspruchten Windungen 9a nicht unbedingt, wie in den Figuren gezeigt, eine kreiszylindrische Aussenform haben. Es sind auch andere Formen denkbar, z.B. solche, bei denen der Stapel gegen das eine und/oder andere Ende hin stetig breiter oder schmaler wird.

## Patentansprüche

1. Vorrichtung zur Absorption kinetischer Energie eines bewegten Körpers, mit einem Zugglied (2), welches eine plastisch verformbare Schraubenfeder mit einem Stapel Windungen (9a) umfasst, dessen Innenfläche einen Durchgang begrenzt, wobei zumindest ein Teil der Windungen (9a) nacheinander durch den Durchgang hindurchziehbar ist, **dadurch gekennzeichnet, dass**
beim Hindurchziehen zumindest des Teils der Windungen (9a) eine Verformung durch Verkleinerung ihres Windungsdurchmessers (10a) und Vergrösserung ihrer Ganghöhe (11a) entsteht, wobei Anschlagsmittel (5, 6; 5') zum Beibehalten der Position des Stapels während der Verformung der Windungen (9b) vorgesehen sind, welche ein Auflager (6; 5') aufweisen, an welchem der Windungsstapel endseitig anliegt und welche eine Durchgangsöffnung (7) aufweist, die sich dem Durchgang des Windungsstapels anschliesst.

2. Vorrichtung nach Anspruch 1, **dadurch gekennzeichnet, dass** die Durchgangsöffnung (7) mindestens dem Innendurchmesser der Windungen (9a) entspricht.

3. Vorrichtung nach Anspruch 1 oder 2, **dadurch gekennzeichnet, dass** die Anschlagsmittel (5, 6; 5') eine Anschlagsfläche (5; 5') umfassen, welche während der Verformung der Windungen (9b) eine Verschiebung des Windungsstapels quer zur Erstreckungsrichtung seines Durchganges hemmt.

4. Vorrichtung nach einem der Ansprüche 1 bis 3, **dadurch gekennzeichnet, dass** das Auflager und die Anschlagsfläche Teil einer Hülse (5') sind, die vorzugsweise abgestuft und/oder einstückig ausgebildet ist.

5. Vorrichtung nach einem der Ansprüche 1 bis 4, **dadurch gekennzeichnet, dass** der Windungsstapel in Erstreckungsrichtung des Durchganges gesehen die Anschlagsfläche (5) überragt.

6. Vorrichtung nach einem der Ansprüche 1 bis 5, **dadurch gekennzeichnet, dass** vor der Beanspruchung der Vorrichtung durch den Körper das eine Ende der Schraubenfeder (2) in den Durchgang des Windungsstapels hineinragt oder durch diesen hindurchgeführt ist.

7. Vorrichtung nach einem der Ansprüche 1 bis 6, **dadurch gekennzeichnet, dass** die Windungen (9a) des Windungsstapels im Wesentlichen denselben Durchmesser (10a) aufweisen.

8. Vorrichtung nach einem der Ansprüche 1 bis 7, **dadurch gekennzeichnet, dass** die Windungen (9a) am Anfang und/oder Ende des Windungsstapels einen stetig grösser oder kleiner werdenden Durchmesser aufweisen.

9. Vorrichtung nach einem der Ansprüche 1 bis 8, **dadurch gekennzeichnet, dass** das Zugglied (2) aus Draht besteht, dessen Zugfestigkeit mindestens 500 N/mm2 und/oder höchstens 2000 N/mm2 beträgt.

10. Vorrichtung nach einem der Ansprüche 1 bis 9, **dadurch gekennzeichnet, dass** das Zugglied (2) aus Stahldraht besteht, der vorzugsweise einen runden Querschnitt aufweist und/oder korrosionsbeständig ist.

11. Vorrichtung nach einem der Ansprüche 1 bis 10, **dadurch gekennzeichnet, dass** die Oberfläche der Windungen (9a) behandelt ist, um sie glatter und/oder verschleissfester zu machen.

12. Vorrichtung nach einem der Ansprüche 1 bis 11, **dadurch gekennzeichnet, dass** mindestens eines der Enden (2a, 2b) des Zuggliedes (2) mit einer Anhängevorrichtung zum Anhängen eines Seiles versehen ist.

13. Vorrichtung nach einem der Ansprüche 1 bis 12, **dadurch gekennzeichnet, dass** das Zugglied (2) durch ein gewundenes Rohr gebildet ist, durch welches vorzugsweise ein Seil hindurchgeführt ist.

## Claims

1. A device for absorbing kinetic energy of a moving body having a tension member (2) which comprises a plastically deformable helical spring having a stack of convolutions (9a), the inner surface of which delimits a passage, whereby at least a part of the convolutions (9a) can be pulled successively through the passage, **characterised in that**
with the pulling through at least a part of the convolutions (9a) a deformation is generated by reducing their convolution diameter (10a) and increasing their pitch (11 a), whereby stop means (5, 6; 5') for retaining the position of the stack during deformation of the convolutions (9b), which have a support (6; 5'), on which the stack of convolutions rests on its end and which has a through-hole (7) which adjoins the passage of the stack of convolutions.

2. The device according to Claim 1, **characterised in that** the through-hole (7) corresponds to at least the internal diameter of the convolutions (9a).

3. The device according or Claim 1 to 2, **characterised in that** the stop means (5, 6; 5') comprise a stop surface (5; 5') which blocks displacement of the stack of convolutions laterally to the direction of extension of its passage during deformation of the convolutions (9b).

4. The device according to any of Claims 1 to 3, **characterised in that** the support and the stop surface are part of a casing (5') which is preferably made with steps and/or in one piece.

5. The device according to any of Claims 1 to 4, **characterised in that** the stack of convolutions projects over the stop surface (5) as viewed in the direction of extension of the passage.

6. The device according to any of claims 1 to 5, **characterised in that** before stressing the device by means of the body the one end of the helical spring (2) projects into the passage of the stack of convolutions or is passed through the latter.

7. The device according to any of claims 1 to 6, **characterised in that** the convolutions (9a) of the stack of convolutions substantially have the same diameter (10a).

8. The device according to any of Claims 1 to 7, **characterised in that** the convolutions (9a) have a diameter becoming constantly greater or smaller at the start and/or end of the stack of convolutions.

9. The device according to any of Claims 1 to 8, **characterised in that** the tension member (2) is made of wire the tensile strength of which is at least 500 N/mm² and/or maximum 2000 N/mm².

10. The device according to any of Claims 1 to 9, **characterised in that** the tension member (2) is made of steel wire which preferably has a round cross-section and/or is corrosion-resistant.

11. The device according to any of Claims 1 to 10, **characterised in that** the surface of the convolutions (9a) is treated in order to make them smoother and/or more wear-resistant.

12. The device according to any of Claims 1 to 11, **characterised in that** at least one of the ends (2a, 2b) of the tension member (2) is provided with an attachment device for attaching a rope.

13. The device according to any of Claims 1 to 12, **characterised in that** the tension member (2) is formed by a twisted pipe through which a rope is preferably passed.

## Revendications

1. Dispositif d'absorption de l'énergie cinétique d'un corps en déplacement, comprenant un organe (2) de traction, qui comprend un ressort hélicoïdal déformable plastiquement, ayant une pile de spires (9a), dont la surface intérieure délimite un passage, au moins une partie des spires (9a) pouvant être tirées l'une après l'autre dans le passage, **caractérisé en ce que**
lorsqu'au moins une partie des spires (9a) est tirée dans le passage, il se crée une déformation par rapetissement de son diamètre (10a) de spire et agrandissement de son pas (11a), des moyens (5, 6, 5') de butée étant prévus pour conserver la position de la pile pendant la déformation des spires (9b), lesquels ont un support (6, 5') auquel la pile de spires s'applique du côté de l'extrémité et qui a une ouverture (7) de passage, qui se raccorde au passage de la pile de spires.

2. Dispositif suivant la revendication 1, **caractérisé en ce que** l'ouverture (7) de passage correspond au moins au diamètre intérieur des spires (9a).

3. Dispositif suivant la revendication 1 ou 2, **caractérisé en ce que** les moyens (5, 6, 5') de butée comprennent une surface (5, 5') de butée, qui empêche, pendant la déformation des spires (9b), un déplacement de la pile de spires transversalement à la direction dans laquelle s'étend son passage.

4. Dispositif suivant l'une des revendications 1 à 3, **caractérisé en ce que** le support et la surface de butée font partie d'un manchon (5'), qui est constitué de préférence en étant étagé et/ou d'un seul tenant.

5. Dispositif suivant l'une des revendications 1 à 4, **caractérisé en ce que** la pile de spires dépasse la surface (5) de butée, considérée dans la direction dans laquelle s'étend le passage.

6. Dispositif suivant l'une des revendications 1 à 5, **caractérisé en ce qu'**avant la sollicitation du dispositif par le corps, l'une des extrémités du ressort (2) hélicoïdal pénètre dans le passage de la pile de spires ou y passe.

7. Dispositif suivant l'une des revendications 1 à 6, **caractérisé en ce que** les spires (9a) de la pile de spires ont sensiblement le même diamètre (10a).

8. Dispositif suivant l'une des revendications 1 à 7, **caractérisé en ce que** les spires (9a) ont, au début et/ou à la fin de la pile de spires, un diamètre devenant constamment plus grand ou plus petit.

9. Dispositif suivant l'une des revendications 1 à 8, **caractérisé en ce que** l'organe (2) de traction est constitué d'un fil métallique, dont la résistance à la traction est d'au moins 500 N/mm2 et/ou d'au plus 2000 N/mm2.

10. Dispositif suivant l'une des revendications 1 à 9, **caractérisé en ce que** l'organe (2) de traction est en un fil d'acier, ayant de préférence une section transversale circulaire et/ou résistant à la corrosion.

11. Dispositif suivant l'une des revendications 1 à 10, **caractérisé en ce que** la surface des spires (9a) est traitée pour les rendre lisses et/ou résistantes à l'usure.

12. Dispositif suivant l'une des revendications 1 à 11, **caractérisé en ce qu'**au moins l'une des extrémités (2a, 2b) de l'organe (2) de traction est pourvue d'un dispositif de suspension d'un câble.

13. Dispositif suivant l'une des revendications 1 à 12, **caractérisé en ce que** l'organe (2) de traction est formé d'un tube sinueux, dans lequel passe de préférence un câble.
